# FASCICULE DE BREVET EUROPEEN

(11) **EP 1 930 655 B1**
(45) Date de publication et mention de la délivrance du brevet: **03.10.2012**
(21) Numéro de dépôt: 07121022.3
(22) Date de dépôt: 19.11.2007
(51) Int. Cl.: F23C 3/00, F23C 6/00, F23D 14/12

(54) **Dispositif de brûleur radiant compact à deux surfaces de chauffe, et application**
Kompakter Strahlungsbrenner mit zwei Heizflächen und seine Verwendung
Compact radiant burner with two heating surfaces and its use

(30) Priorité: 24.11.2006 FR 0610331
(43) Date de publication de la demande: 11.06.2008
(73) Titulaire: GDF SUEZ, 92400 Courbevoie (FR); Commissariat A L'Energie Atomique - CEA, 75015 Paris (FR)
(72) Inventeur: Hody, Stéphane, 94360 Bry sur Marne (FR)
(74) Mandataire: Bentz, Jean-Paul

(56) Documents cités:
- US-A- 1 939 941
- US-A- 2 621 721
- US-A- 5 355 841
- MITAL R ET AL: "High efficiency multifuel combustor with potential for commercial and military applications ÝAMTEC" IECEC '97. PROCEEDINGS OF THE 32ND INTERSOCIETY ENERGY CONVERSION ENGINEERING CONFERENCE. ENERGY SYSTEMS, RENEWABLE ENERGY RESOURCES, ENVIRONMENTAL IMPACT AND POLICY IMPACTS ON ENERGY. HONOLULU, HI, JULY 27 - AUG. 1, 1997, INTERSOCIETY ENERGY CONVERS, vol. VOL. 3 & 4, 27 juillet 1997 (1997-07-27), pages 949-954, XP010269195 ISBN: 0-7803-4515-0

## Description

L'invention concerne, de façon générale, le domaine de l'énergie et notamment de l'exploitation du gaz.

Plus précisément, l'invention concerne un dispositif de brûleur radiant à gaz comprenant une première chambre cylindrique et un premier injecteur d'alimentation de la première chambre en un mélange combustible gazeux, la première chambre comprenant une surface de chauffe périphérique externe.

Un brûleur de ce type est par exemple décrit dans le document de brevet BE 1 005 739 et le brevet US 2621721.

A chaque géométrie de brûleur correspond des caractéristiques spécifiques de chauffe, liées à la façon dont la chaleur est concentrée et dont elle se disperse.

Dans certaines applications, qui requièrent l'utilisation de différentes caractéristiques de chauffe, il est donc nécessaire de prévoir des brûleurs de géométries différentes.

Or, cette exigence conduit traditionnellement à un agencement de brûleurs dont l'encombrement total est supérieur à la somme des encombrements des différents brûleurs.

La présente invention, qui se situe dans ce contexte, a pour but de proposer un dispositif de brûleur exempt de ce défaut.

A cette fin, le brûleur de l'invention comprend en outre une deuxième chambre, cylindrique et creuse, et un second injecteur d'alimentation de la deuxième chambre en mélange combustible gazeux, la deuxième chambre est disposée à l'intérieur de la première chambre, est séparée de cette première chambre par une paroi fermant les première et deuxième chambres, et présente une surface de chauffe interne, et les premier et second injecteurs sont conçus pour alimenter les première et seconde chambres séparément et indépendamment l'un de l'autre.

Les première et deuxième chambres sont de préférence coaxiales, chacune des première et deuxième chambres étant en outre par exemple conformée en un cylindre de révolution.

L'invention concerne également l'application du dispositif tel que précédemment défini à une installation autonome de production de chaleur et d'électricité utilisant une pile à combustible.

Dans cette application, la pile à combustible peut être disposée à l'intérieur de la surface de chauffe interne.

En outre, l'installation peut comprendre un échangeur de chaleur entourant la surface de chauffe périphérique externe et recevant donc tout le flux thermique produit par cette surface de chauffe externe.

D'autres caractéristiques et avantages de l'invention ressortiront clairement de la description qui en est faite ci-après, à titre indicatif et nullement limitatif, en référence aux dessins annexés, dans lesquels :

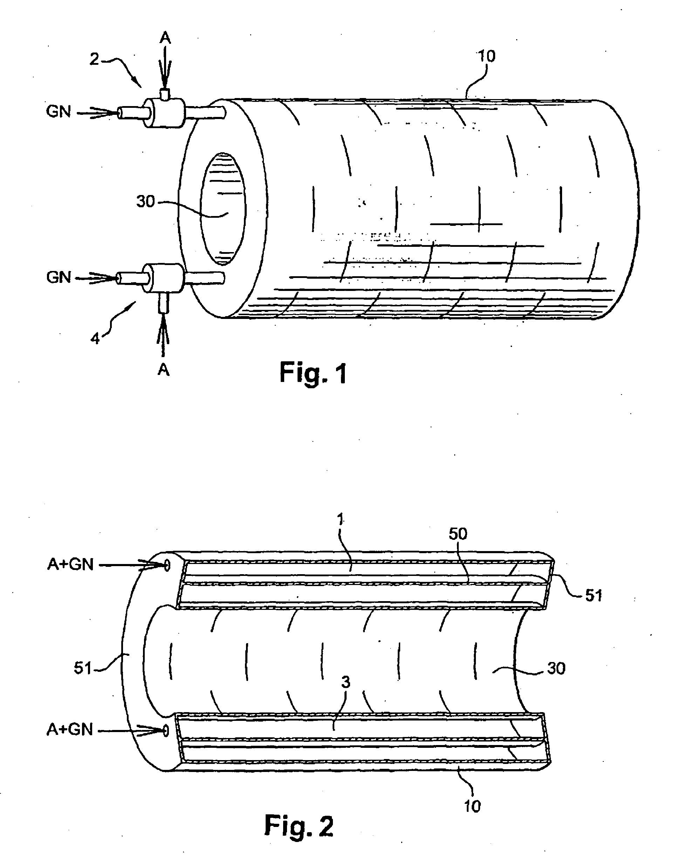

- la figure 1 est une vue en perspective schématique du dispositif de l'invention; et
- la figure 2 est une vue écorchée du dispositif illustré à la figure 1.

Comme annoncé précédemment, l'invention concerne un dispositif de brûleur radiant à gaz comprenant une chambre cylindrique 1 et un injecteur 2 permettant d'alimenter cette chambre en un mélange combustible gazeux par exemple composé d'air A et d'un gaz naturel GN.

Selon l'invention, la chambre 1 est fermée de façon étanche par une paroi cylindrique 50 et par des parois frontales 51 et présente une surface de chauffe périphérique externe 10 par exemple constituée de fils d'acier tressés, d'une plaque d'acier percée ou de céramique.

Le dispositif de l'invention comprend en outre une deuxième chambre 3 et un deuxième injecteur 4 d'alimentation en mélange gazeux, dédié à cette deuxième chambre 3.

La deuxième chambre 3, qui est cylindrique, creuse, et disposée à l'intérieur de la première chambre 1, selon l'invention est fermée de façon étanche par la paroi cylindrique 50 et les parois frontales 51, et présente une surface de chauffe interne 30 par exemple constituée de fils d'acier tressés, d'une plaque d'acier percée ou de céramique.

Les chambres 1 et 3 sont par exemple coaxiales et chacune d'elles prend essentiellement la forme d'un cylindre de révolution.

Par ailleurs, les injecteurs 2 et 4 d'alimentation en mélange combustible sont conçus pour alimenter, indépendamment l'un de l'autre, les chambres 1 et 3 de manière séparée.

Il est ainsi possible de régler séparément les flux thermiques respectivement produits par les surfaces de chauffe 10 et 30.

Compte tenu des géométries différentes des surfaces de chauffe 10 et 30, les flux thermiques respectivement produits par ces surfaces présentent des propriétés de dissipation différentes, le flux thermique émanant de la surface externe 10 présentant un gradient de température important alors que le flux thermique émanant de la surface interne 30 est propice à l'obtention d'une température élevée et homogène.

Le dispositif de l'invention s'avère ainsi idéalement applicable à la réalisation d'une installation autonome de production de chaleur et d'électricité utilisant une pile à combustible, la pile à combustible étant placée à l'intérieur de la surface de chauffe interne 30, et la surface de chauffe externe 10 étant placée à l'intérieur d'un échangeur de chaleur équipant cette installation.

## Revendications

1. Dispositif de brûleur radiant à gaz comprenant :
- une première chambre cylindrique (1) et un premier injecteur (2) d'alimentation de la première chambre en un mélange combustible gazeux, la première chambre (1) comprenant une surface de chauffe périphérique externe (10),
- une deuxième chambre (3), cylindrique et creuse, et un second injecteur (4) d'alimentation de la deuxième chambre en mélange combustible gazeux la deuxième chambre (3) étant disposée à l'intérieur de la première chambre (1), étant séparée de cette première chambre (1) par une paroi (50), et présentant une surface de chauffe interne (30),
les premier et second injecteurs (2, 4) étant conçus pour alimenter les première et seconde chambres (1, 3) séparément et indépendamment l'un de l'autre, **caractérisé en ce que** les première (1) et deuxième (3) chambres sont fermées par la paroi (50) et par des parois frontales (51).

2. Dispositif de brûleur radiant suivant la revendication 1, **caractérisé en ce que** les première et deuxième chambres (1, 3) sont coaxiales.

3. Dispositif de brûleur radiant suivant l'une quelconque des revendications 1 et 2, **caractérisé en ce que** chacune des première et deuxième chambres (1, 3) est conformée en un cylindre de révolution.

4. Application d'un dispositif suivant l'une quelconque des revendications précédentes à une installation autonome de production de chaleur et d'électricité utilisant une pile à combustible.

5. Application suivant la revendication 4, **caractérisée en ce que** la pile à combustible est disposée à l'intérieur de la surface de chauffe interne (30).

6. Application suivant la revendication 4 ou 5, **caractérisée en ce que** l'installation comprend un échangeur de chaleur entourant la surface de chauffe périphérique externe (10).

## Claims

1. A radiant gas burner device comprising
- a first cylindrical chamber (1) and a first injector (2) for feeding the first chamber with a combustible gas mixture, the first chamber (1) comprising an external peripheral heating surface (10),
- a second chamber (3), cylindrical and hollow, and a second injector (4) for feeding the second chamber with a combustible gas mixture the second chamber (3) being disposed inside the first chamber (1), being separated from this first chamber (1) by a wall (50), and having an internal heating surface (30),
the first and second injectors (2, 4) being designed for feeding the first and second chambers (1, 3), separately and independently of each other,
**characterized in that** the first (1) and the second (3) chambers are closed by the wall (50) and by frontal walls (51).

2. The radiant burner device according to claim 1, **characterized in that** the first and second chambers (1, 3) are coaxial.

3. The radiant burner device according to any one of claims 1 and 2, **characterized in that** each of the first and second chambers (1, 3) is conformed as a cylinder of revolution.

4. The application of a device according to any one of the preceding claims to a stand-alone facility of producing heat and electricity, using a fuel cell.

5. The application according to claim 4, **characterized in that** the fuel cell is disposed inside the internal heating surface (30).

6. The application according to claim 4 or 5, **characterized in that** the installation comprises a heat exchanger surrounding the external peripheral heating surface (10).

## Patentansprüche

1. Gasstrahlungsbrennvorrichtung umfassend:
- eine erste zylindrische Kammer (1) und eine erste Einspritzdüse (2) zur Versorgung der ersten Kammer mit einem gasförmigen Brennstoffgemisch, wobei die erste Kammer (1) eine externe peripherere Heizfläche (10) umfasst,
- eine zweite zylindrische und hohle Kammer (3) und eine zweite Einspritzdüse (4) zur Versorgung der zweiten Kammer mit einem gasförmigen Brennstoffgemisch, wobei die zweite Kammer (3) im Inneren der ersten Kammer (1) angeordnet und von dieser ersten Kammer durch eine Wand (50) getrennt ist und eine interne Heizfläche (30) aufweist,
wobei die erste und die zweite Einspritzdüse (2,4) so ausgelegt sind, dass sie die erste und zweite Kammer (1,3) getrennt und voneinander unabhängig versorgen, **dadurch gekennzeichnet dass**, die erste (1) und die zweite (3) Kammer durch die Wand (50) und Stirnwände(51) geschlossen sind.

2. Gasstrahlungsbrennvorrichtung nach Anspruch 1, **dadurch gekennzeichnet, dass** die erste und zweite Kammer (1,3) koaxial sind.

3. Gasstrahlungsbrennvorrichtung nach Anspruch 1 oder 2, **dadurch gekennzeichnet, dass** die erste und zweite Kammer (1,3) als Kreiszylinder ausgebildet sind.

4. Verwendung einer Vorrichtung nach einem der voranstehenden Ansprüche in einer autonomen eine Brennstoffzelle verwendenden Wärme- und Stromerzeugungsanlage.

5. Verwendung nach Anspruch 4, **dadurch gekennzeichnet, dass** die Brennstoffzelle im Inneren der internen Heizfläche(30) angeordnet ist.

6. Verwendung nach Anspruch 4 oder 5, **dadurch gekennzeichnet, dass** die Anlage einen Wärmetauscher umfasst, der die externe peripherer Heizfläche (10) umgibt.
